# EUROPÄISCHE PATENTSCHRIFT

(11) **EP 2 172 414 B1**
(45) Veröffentlichungstag und Bekanntmachung des Hinweises auf die Patenterteilung: **28.11.2018**
(21) Anmeldenummer: 09012230.0
(22) Anmeldetag: 25.09.2009
(51) Int. Cl.: B66F 9/24, B62B 3/06, B62D 51/04, B62B 5/00, B62D 51/00, B66F 17/00

(54) **Deichselgeführtes Flurförderzeug**
Industrial truck led by a drawbar
Chariot de manutention commandé par timon

(30) Priorität: 01.10.2008 DE 102008050203
(43) Veröffentlichungstag der Anmeldung: 07.04.2010
(73) Patentinhaber: OM Carrelli Elevatori S.p.A., 20020 Lainate (MI) (IT)
(72) Erfinder: Cuvilliez, Julien, 60150 Cambronne-Les-Ribecourt (FR); Ferreira, Paulo, 60940 Cinqueux (FR)
(74) Vertreter: Patentship Patentanwaltsgesellschaft mbH

(56) Entgegenhaltungen:
- EP-A- 1 264 759
- EP-A- 1 475 297
- EP-A- 1 985 576
- WO-A-2006/113510
- WO-A-2009/009446
- US-A1- 2006 231 302

## Beschreibung

Die Erfindung betrifft ein deichselgelenktes Flurförderzeug mit einer um eine vertikale Achse schwenkbaren Deichsel und einem Fahrantriebsmotor, wobei die maximale Fahrgeschwindigkeit des Flurförderzeugs in Abhängigkeit von dem Schwenkwinkel der Deichsel um die vertikale Achse steuerbar ist, wobei in einem ersten Schwenkbereich um die Geradeausfahrtstellung der Deichsel, wobei der erste Schwenkbereich die Geradeausfahrtstellung der Deichsel mit einem Schwenkwinkel α von 0° enthält, das Flurförderzeug mit einer maximalen Fahrgeschwindigkeit betreibbar ist, und in einem zweiten Schwenkbereich, der die maximale Schwenkstellung der Deichsel mit einem Schwenkwinkel α von +/-90° enthält, mit einer verringerten Höchstgeschwindigkeit betreibbar ist..

Ein gattungsgemäße Flurförderzeug, bei dem die maximale Fahrgeschwindigkeit ausgehend von einer Geradeausfahrstellung einer Lenkdeichsel bei einer Lenkbewegung in die rechte bzw. linke Endstellungen verringert wird, ist aus der WO2006/113510 A2 bekannt. Bei der WO2006/113510 A2 erfolgt hierbei eine Beeinflussung der Fahrgeschwindigkeit in mehreren Stufen.

Flurförderzeuge der genannten Art sind häufig als elektrisch angetriebene Niederhubwagen oder Hochhubwagen ausgeführt, die im Mitgängerbetrieb von einer Bedienperson betrieben werden. Ein von einem Fahrantriebsmotor angetriebenes Antriebsrad des Flurförderzeugs ist dabei direkt oder indirekt mit der Deichsel verbunden, so dass das Flurförderzeug durch Schwenken der Deichsel um eine vertikale Achse von der Bedienperson lenkbar ist. Der Schwenkwinkel der Deichsel bestimmt hierbei den Lenkwinkel des Antriebsrades.

Zum Betätigen der verschiedenen Funktionen des Flurförderzeugs, insbesondere des Fahrantriebs, wird die Deichsel, ausgehend von einer zumindest annähernd senkrechten Außerbetriebsstellung, nach unten geschwenkt.

In bestimmten Betriebssituationen, beispielsweise wenn die Bedienperson während des Betriebs mit hoher Fahrgeschwindigkeit durch eine schnelle Bewegen der Deichsel einen abrupten Lenkvorgang mit einem starkem Lenkeinschlag durchführt, kann dies bei dem Flurförderzeugen, insbesondere bei beladenem Flurförderzeug mit einer aufgenommenen Last, zu unsicheren Betriebszuständen führen.

Um derartige unsichere Betriebszustände zu vermeiden, ist es bereits bekannt, die maximale Fahrgeschwindigkeit bei Überschreiten eines bestimmten Lenkwinkels der Deichsel auf einen festen reduzierten Wert zu begrenzen. Insbesondere im Betrieb mit maximaler Fahrgeschwindigkeit kann dies bei dem Übergang der Fahrgeschwindigkeit von der maximalen Fahrgeschwindigkeit auf den reduzierten Wert durch eine entsprechende Lenkbewegung der Deichsel zu einem ruckartigen und somit unerwünschten Abbremsen des Flurförderzeugs führen. Analog kann bei dem Übergang von dem reduzierten Wert auf die maximale Fahrgeschwindigkeit bei einem Zurücklenken der Deichsel in Richtung der Geradeausfahrtstellung ein plötzliches Beschleunigen des Flurförderzeugs auftreten. Ein derartiges abruptes Abbremsen und Beschleunigen wird von der Bedienperson eines deichselgelenkten Flurförderzeugs als störend empfunden und kann zu gefährlichen Betriebszuständen führen, insbesondere bei hohen Lenkwinkeln der Deichsel und einem Rangieren des Flurförderzeugs auf engem Raum, bei denen sich die Bedienperson aufgrund der sich seitlich befindlichen Deichsel in geringem seitlichen Abstand zu dem Flurförderzeug befindet.
Der Erfindung liegt daher die Aufgabe zugrunde, ein Flurförderzeugs der eingangs genannten Gattung zur Verfügung zu stellen, mit dem das Betriebsverhalten und die Betriebssicherheit verbessert werden kann. Diese Aufgabe wird erfindungsgemäß dadurch gelöst, dass zwischen dem ersten Schwenkbereich und dem zweiten Schwenkbereich ein Übergangsbereich ausgebildet ist, in dem die maximale Fahrgeschwindigkeit kontinuierlich mit dem Schwenkwinkel der Deichsel veränderbar ist. Erfindungsgemäß ist somit zwischen dem ersten Schwenkbereich der Deichsel um die Geradeausfahrtstellung, in dem das Flurförderzeug mit der maximalen Fahrgeschwindigkeit betrieben werden kann, und dem zweiten Schwenkbereich im Bereich der maximalen Schwenkstellung und somit des maximalen Lenkeinschlags der Deichsel, in dem das Flurförderzeug mit der reduzierten Höchstgeschwindigkeit betrieben wird, ein Übergangsbereich ausgebildet, in dem die maximale Fahrgeschwindigkeit und somit die Höchstgeschwindigkeit des Flurförderzeugs variabel ist und in Abhängigkeit von der Schwenkstellung und somit dem Lenkwinkel der Deichsel gesteuert ist. In dem Übergangsbereich wird somit die Höchstgeschwindigkeit fortlaufend an den Schwenkwinkel und somit den Lenkwinkel der Deichsel angepasst. Je größer der Schwenkwinkel der Deichsel und somit der Lenkwinkel wird, desto stärker wird die maximale Fahrgeschwindigkeit herabgesetzt. Die Veränderung der Höchstgeschwindigkeit erfolgt dabei kontinuierlich, derart, dass kein ruckartiges Beschleunigen oder Abbremsen des Flurförderzeugs beim Verschwenken der Deichsel und somit beim Lenken des Flurförderzeugs ausgelöst wird, wodurch sich eine hohe Betriebssicherheit des Flurförderzeugs mit einem angenehmen Betriebsverhalten und einer verbesserten Ergonomie für die Bedienperson ergibt, insbesondere bei hohen Lenkwinkeln und seitlich stehender Deichsel beim Rangieren auf engem Raum.

Gemäß einer bevorzugten Ausführungsform der Erfindung ist vorgesehen, dass die Höchstgeschwindigkeit in dem zweiten Schwenkbereich dem Bereich des 0,2- bis 0,4-fachen der maximalen Fahrgeschwindigkeit im ersten Schwenkbereich entspricht, insbesondere dem 0,33-fachen der maximalen Fahrgeschwindigkeit im ersten Schwenkbereich entspricht. Mit einer derartigen Begrenzung der maximalen Fahrgeschwindigkeit kann insbesondere bei mitgängergeführten deichselgeführten Flurförderzeugen das Kurvenfahrverhalten des Flurförderzeugs verbessert und eine hohe Betriebssicherheit erzielt werden sowie die Handhabung und Ergonomie für die Bedienperson bei großen Lenkwinkeln verbessert werden.

Besondere Vorteile ergeben sich, wenn gemäß einer Weiterbildung der Erfindung in dem Übergangsbereich die maximale Fahrgeschwindigkeit linear mit dem Schwenkwinkel der Deichsel veränderbar ist. Mit einer linearen Verringerung der maximalen Fahrgeschwindigkeit mit zunehmendem Schwenkwinkel der Deichsel in dem Übergangsbereich kann auf einfache Weise bei einem mitgängergeführten Flurförderzeug das Fahrverhalten und die Kurvenstabilität bei günstiger Handhabung und Ergonomie für die Bedienperson verbessert werden. Die kontinuierliche Änderung der maximalen Fahrgeschwindigkeit kann dabei stufenlos oder in feiner Abstufung erfolgen.

Der erste Schwenkbereich umfasst gemäß einer bevorzugten Ausführungsform der Erfindung einen Schwenkwinkel der Deichsel im Bereich von +/- 50° bis +/- 70°, insbesondere +/-60°, ausgehend von der Geradeausfahrtstellung der Deichsel. Die variable Steuerung der Höchstgeschwindigkeit ist somit auf hohe Schwenkwinkel und somit große Lenkwinkel der Deichsel begrenzt, bei denen insbesondere bei beladenem Flurförderzeug aus Stabilitätsgründen eine Reduzierung der Fahrgeschwindigkeit sinnvoll ist und bei denen sich aufgrund des hohen Schwenkwinkels und der sich dadurch ergebenden seitlichen Stellung der Deichsel der Abstand der Bedienperson von dem Flurförderzeug bei einem deichselgeführten Flurförderzeug verringert, so dass durch die Verringerung der Fahrgeschwindigkeit die Betriebssicherheit und die Handhabung des Flurförderzeugs durch die sich nahe an dem Flurförderzeug befindliche Bedienperson bei hohen Schwenkwinkel verbessert werden kann.

Die variable Steuerung der Höchstgeschwindigkeit kann angrenzend von dem ersten Schwenkwinkel bis zu der maximalen Schwenkstellung und somit dem maximalen Lenkwinkel der Deichsel erfolgen.

Sofern gemäß einer bevorzugten Ausgestaltungsform der Erfindung der zweite Schwenkbereich einen Schwenkwinkel der Deichsel im Bereich von 0° bis 15° vor der maximalen Schwenkstellung der Deichsel umfasst, insbesondere 10° vor der maximalen Schwenkstellung umfasst, kann auf einfache Weise im Bereich des zweiten Schwenkwinkels der Deichsel eine konstante reduzierte Höchstgeschwindigkeit des Flurförderzeugs erzielt werden, die bei hohen Lenkeinschlägen im Bereich des maximalen Lenkwinkels eine verbesserte Stabilität und Handhabung des mitgängergeführten Flurförderzeugs, insbesondere beim Rangieren auf engstem Raum, mit hoher Betriebssicherheit für die Bedienperson ergibt.

Zur Erfassung des Schwenkwinkels der Deichsel ist gemäß einer bevorzugten Ausgestaltungsform der Erfindung eine kontinuierliche Sensoreinrichtung, insbesondere ein Potentiometer, vorgesehen. Mit einem derartigen Potentiometer kann der Schwenkwinkel und somit der Lenkwinkel der Deichsel auf einfache Weise erfasst werden und somit in dem Übergangsbereich zwischen dem ersten und dem zweiten Schwenkbereich der Deichsel eine variable Steuerung der Höchstgeschwindigkeit durchgeführt werden.

Sofern gemäß einer bevorzugten Ausführungsform der Erfindung eine elektronische Steuereinrichtung vorgesehen ist, die eingangseitig mit der Sensoreinrichtung und ausgangsseitig mit dem Fahrantriebsmotor in Wirkverbindung steht, kann die maximale Fahrgeschwindigkeit und somit die Höchstgeschwindigkeit durch eine entsprechende Ansteuerung des Fahrantriebsmotors in Abhängigkeit von dem Schwenkwinkel und somit dem Lenkwinkel der Deichsel auf einfache Weise gesteuert werden.

Weitere Vorteile und Einzelheiten der Erfindung werden anhand des in den schematischen Figuren dargestellten Ausführungsbeispiels näher erläutert. Hierbei zeigen die
- Figur 1: ein erfindungsgemäßes Flurförderzeug in einer Seitenansicht und
- Figur 2: das Flurförderzeug der Figur 1 in einer Draufsicht.

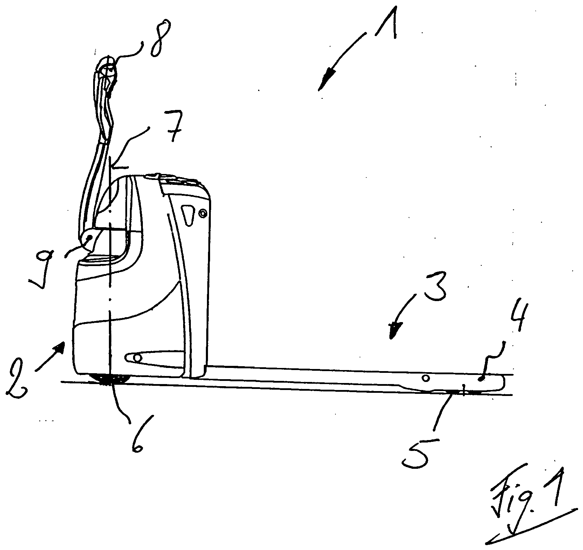

In der Figur 1 ist ein erfindungsgemäßes, als mitgängergeführten Hubwagen ausgebildetes deichselgeführtes Flurförderzeug 1 mit einem Antriebsteil 2 und einem relativ zu dem Antriebsteil 2 anhebbaren und absenkbaren Lastteil 3 dargestellt. Das Lastteil 3 umfasst eine von beispielsweise zwei seitlich beabstandeten Lastarmen 4 gebildete Lastgabel. Mittels an den Spitzen der Lastarme 4 angeordneten Lastrollen 5 ist der Lastteil 3 auf einer Fahrbahn abgestützt.

In dem Antriebsteil 2 ist eine nicht mehr dargestellte Fahrantriebseinheit, die ein Antriebsrad 6 und einen das Antriebsrad 6 antreibenden elektrischen Fahrantriebsmotor umfasst, um eine vertikale Schwenkachse 7 lenkbar angeordnet ist. Das Lenken des Flurförderzeugs 1 durch die Bedienperson erfolgt mittels einer mit der Fahrantriebseinheit verbundenen Deichsel 8, die ebenfalls um die vertikale Schwenkachse 7 schwenkbar angeordnet ist.

Die Deichsel 8 kann hierbei direkt mit der Fahrantriebeinheit und somit dem Antriebsrad 6 verbunden sein. Es ist jedoch ebenfalls möglich, zum Lenken der Fahrantriebseinheit einen elektrischen Lenkmotor vorzusehen, der mit der Fahrantriebseinheit in Wirkverbindung steht und in Abhängigkeit von der Schwenkstellung der Deichsel 8 um die vertikale Schwenkachse 7 gesteuert ist. Bei derartigen Flurförderzeugen mit einer elektrischen Lenkung kann die Schwenkachse 7 der Fahrantriebseinheit von der Schwenkachse der Deichsel 8 in seitlicher Richtung des Flurförderzeugs beabstandet sein.

Die Deichsel 8 ist weiterhin um eine horizontale Schwenkachse 9 drehbar am Flurförderzeug 1 angeordnet, so dass diese von der dargestellten im Wesentlichen senkrechten Stellung nach unten in eine im Wesentlichen waagerechte Stellung verschwenkt werden kann. Der Schwenkbereich der Deichsel 8 um die horizontale Schwenkachse 9 unterteilt sich in einen oberen Bremsbereich im Bereich der senkrechten Stellung, einen sich daran nach unten anschließenden Normalfahrbereich und einen sich nach unten an den Normalfahrbereich anschließenden unteren Bremsbereich im Bereich der waagerechten Stellung der Deichsel 8.

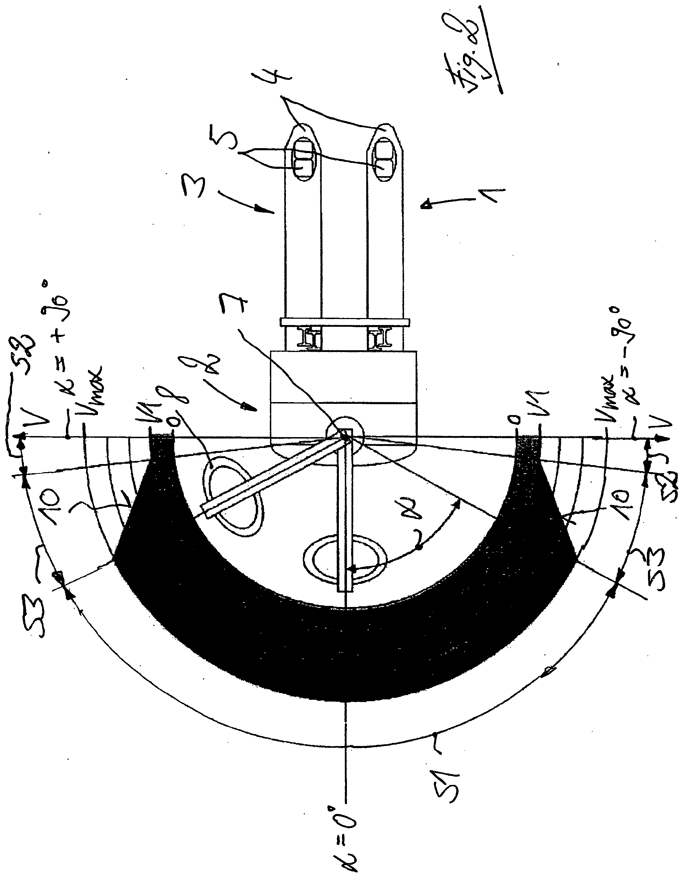

Die Deichsel 8 ist hierbei - wie aus der Figur 2 ersichtlich ist - ausgehend von einer Geradeausfahrtstellung mit einem Schwenkwinkel α=0° der Deichsel 8 und somit einem Lenkwinkel von 0° in beide Richtungen in eine maximale Schwenkstellung mit einem maximalen Schwenkwinkel α=+/-90° der Deichsel 8 und somit maximalem Lenkwinkel verschwenkbar.

Erfindungsgemäß ist ein die Geradeausfahrtstellung der Deichsel 8 umfassender erster Schwenkbereich S1 vorgesehen, in dem das Flurförderzeug mit einer maximalen Fahrgeschwindigkeit Vₘₐₓ, beispielsweise 6 km/h, betreibbar ist und für jede Lenkrichtung jeweils ein zweiter Schwenkbereich S2 vorgesehen, der im Bereich der maximalen Schwenkstellungen der Deichsel 8 angeordnet ist und jeweils den maximalen Schwenkwinkel α=+/-90° der Deichsel 8 beinhaltet, in dem das Flurförderzeug 1 mit einer reduzierten Höchstgeschwindigkeit V1 betreibbar ist. Die reduzierte Höchstgeschwindigkeit V1 entspricht hierbei bevorzugterweise dem 0,33-fachen der maximalen Fahrgeschwindigkeit Vₘₐₓ, so dass sich bei einer maximalen Fahrgeschwindigkeit von Vₘₐₓ = 6 km/h eine reduzierte Höchstgeschwindigkeit bei maximalem Schwenkwinkel und somit Lenkwinkel der Deichsel von V1 = 2 km/h ergibt.

Zwischen dem ersten Schwenkbereich S1 der Deichsel 8 und dem zweiten Schwenkbereich S2 der Deichsel 8 ist jeweils ein Übergangsbereich S3 ausgebildet, in dem die maximale Fahrgeschwindigkeit Vₘₐₓ in Abhängigkeit von dem Schwenkwinkel a der Deichsel 8 kontinuierlich veränderbar und somit steuerbar ist. Gemäß dem in der Figur 2 dargestellten Geschwindigkeitsdiagramm, in der die Fahrgeschwindigkeit V über den Schwenkwinkel α und somit den Lenkwinkel der Deichsel 8 dargestellt ist, ist in dem Übergangsbereich S3 jeweils ein linearer Verlauf 10 der maximalen Fahrgeschwindigkeit vorgesehen, so dass beim Verschwenken der Deichsel 8 ausgehend von der Geradeausfahrtstellung und somit dem ersten Schwenkbereich S1 in Richtung der maximalen Schwenkstellung und somit dem zweiten Schwenkbereich S2 die Fahrgeschwindigkeit in dem Übergangsbereich S3 von der maximalen Fahrgeschwindigkeit Vₘₐₓ auf die reduzierte Höchstgeschwindigkeit V1 linear reduziert wird und entsprechend beim Zurückschwenken der Deichsel 8 ausgehend von der maximalen Schwenkstellung und somit dem zweiten Schwenkbereich S2 der Deichsel 8 in Richtung der Geradeausfahrtstellung und somit dem ersten Schwenkbereich S1 die Fahrgeschwindigkeit V in dem Übergangsbereich S3 von der maximalen Höchstgeschwindigkeit V1 auf die maximale Fahrgeschwindigkeit Vₘₐₓ linear erhöht wird.

Der erste Schwenkbereich S1 der Deichsel 8 erstreckt sich ausgehend von der Geradeausfahrtfahrtstellung mit Schwenkwinkel der Deichsel 8 von α=0° über einen Schwenkwinkel a und somit Lenkwinkel der Deichsel 8 von insbesondere α = +/- 60°. Der zweite Schwenkbereich S2 der Deichsel 8 umfasst einen Schwenkwinkelbereich von insbesondere ca. 7° vor der jeweiligen maximalen Schwenkstellung mit maximalem Schwenkwinkel α=+/- 90° und somit maximalem Lenkwinkel und somit einen Schwenkwinkel α der Deichsel 8 von α=+/- 83° bis α=+/- 90°. Der zwischen dem ersten Schwenkbereich S1 und dem zweiten Schwenkbereich S2 angeordnete Übergangsbereich S3, in dem die maximale Fahrgeschwindigkeit Vₘₐₓ linear mit dem Schwenkwinkel a der Deichsel 8 reduziert bzw. erhöht wird, umfasst somit einen Schwenkwinkelbereich der Deichsel von ca. 23° und umfasst den Lenkbereich der Deichsel 8 von einem Schwenkwinkel und somit Lenkwinkel α=+/-60° bis a=+-/83° der Deichsel 8.

Die erfindungsgemäße Steuerung der Fahrgeschwindigkeit V in dem schwenkwinkel- und somit lenkwinkelabhängigen Übergangsbereich S3 erfolgt hierbei insbesondere im Normalfahrbereich der um die horizontale Schwenkachse 9 verschwenkten Deichsel 8 und/oder bei beladenem Flurförderzeug 1.

Mit der erfindungsgemäßen Steuerung der Fahrgeschwindigkeit V in dem schwenkwinkel- und somit lenkwinkelabhängigen Übergangsbereich S3 ergibt sich aufgrund der Vermeidung einer sprunghaften Fahrgeschwindigkeitsänderung eine erhöhte Betriebssicherheit und ein verbessertes Betriebsverhalten für die Bedienperson, insbesondere beim Manövrieren eines beladenen Flurförderzeugs auf engen Räumen, wobei die Bedienperson bei verschwenkter Deichsel 8 seitlich neben dem Flurförderzeug 1 steht und sich ein kleiner Abstand und somit eine große Nähe der Bedienperson zu dem Flurförderzeug 1 ergibt.

## Patentansprüche

1. Deichselgelenktes Flurförderzeug (1) mit einer um eine vertikale Achse (7) schwenkbaren Deichsel (8) und einem Fahrantriebsmotor, wobei die maximale Fahrgeschwindigkeit (Vₘₐₓ) des Flurförderzeugs (1) in Abhängigkeit von dem Schwenkwinkel (α) der Deichsel (8) um die vertikale Achse (7) steuerbar ist, wobei in einem ersten Schwenkbereich (S1) um die Geradeausfahrtstellung der Deichsel (8), wobei der erste Schwenkbereich (S1) die Geradeausfahrtstellung der Deichsel (8) mit einem Schwenkwinkel (α) von 0° enthält, das Flurförderzeug (1) mit einer maximalen Fahrgeschwindigkeit (Vₘₐₓ) betreibbar ist, und in einem zweiten Schwenkbereich (S2), der die maximale Schwenkstellung der Deichsel (8) mit einem Schwenkwinkel (α) von +/-90° enthält, mit einer verringerten Höchstgeschwindigkeit (V1) betreibbar ist, **dadurch gekennzeichnet, dass** zwischen dem ersten Schwenkbereich (S1) und dem zweiten Schwenkbereich (S2) ein Übergangsbereich (S3) ausgebildet ist, in dem die maximale Fahrgeschwindigkeit (Vₘₐₓ) kontinuierlich mit dem Schwenkwinkel (α) der Deichsel (8) veränderbar ist.

2. Deichselgelenktes Flurförderzeug nach Anspruch 1, **dadurch gekennzeichnet, dass** die Höchstgeschwindigkeit (V1) in dem zweiten Schwenkbereich (S2) dem Bereich des 0,2- bis 0,4-fachen der maximalen Fahrgeschwindigkeit (Vₘₐₓ) im ersten Schwenkbereich (S1) entspricht, insbesondere dem 0,33-fachen der maximalen Fahrgeschwindigkeit (Vₘₐₓ) im ersten Schwenkbereich (S1) entspricht.

3. Deichselgelenktes Flurförderzeug nach Anspruch 1 oder 2, **dadurch gekennzeichnet, dass** in dem Übergangsbereich (S3) die maximale Fahrgeschwindigkeit (Vₘₐₓ) linear mit dem Schwenkwinkel (α) der Deichsel (8) veränderbar ist.

4. Deichselgelenktes Flurförderzeug nach einem der Ansprüche 1 bis 3, **dadurch gekennzeichnet, dass** der erste Schwenkbereich (S1) einen Schwenkwinkel (α) der Deichsel (8) im Bereich von +/- 50° bis +/- 70°, insbesondere +/- 60°, ausgehend von der Geradeausfahrtstellung der Deichsel (8) umfasst.

5. Deichselgelenktes Flurförderzeug nach einem der Ansprüche 1 bis 4, **dadurch gekennzeichnet, dass** der zweite Schwenkbereich (S2) einen Schwenkwinkel (α) der Deichsel (8) im Bereich von 0° bis 15° vor der maximalen Schwenkstellung der Deichsel (8) umfasst, insbesondere 10° vor der maximalen Schwenkstellung der Deichsel (8) umfasst.

6. Deichselgelenktes Flurförderzeug nach einem der Ansprüche 1 bis 5, **dadurch gekennzeichnet, dass** der Schwenkwinkel (α) der Deichsel (8) mittels eines kontinuierlichen Sensoreinrichtung, insbesondere einem Potentiometer, erfassbar ist.

7. Deichselgelenktes Flurförderzeug nach Anspruch 6, **dadurch gekennzeichnet, dass** eine elektronischen Steuereinrichtung vorgesehen ist, die eingangseitig mit der Sensoreinrichtung und ausgangsseitig mit dem Fahrantriebsmotor in Wirkverbindung steht.

## Claims

1. Drawbar-steered industrial truck (1) having a drawbar (8) which can swivel about a vertical axis (7) and having a drive motor, wherein the maximum velocity (Vₘₐₓ) of the industrial truck (1) can be controlled as a function of the swivel angle (α) of the drawbar (8) about the vertical axis (7), wherein in a first swivel range (S1) about the straight-ahead travel position of the drawbar (8), wherein the first swivel range (S1) contains the straight-ahead travel position of the drawbar (8) with a swivel angle (α) of 0°, the industrial truck (1) can be operated with a maximum velocity (Vₘₐₓ), and in a second swivel range (S2) which contains the maximum swivel position of the drawbar (8) with a swivel angle (α) of +/- 90° it can be operated with a reduced maximum speed (VI), **characterized in that** a transition range (S3) in which the maximum velocity (Vₘₐₓ) can be changed continuously with the swivel angle (α) of the drawbar (8), is formed between the first swivel range (S1) and the second swivel range (S2) .

2. Drawbar-steered industrial truck according to Claim 1, **characterized in that** the maximum speed (V1) in the second swivel range (S2) corresponds to the range of 0.2 to 0.4 times the maximum velocity (Vₘₐₓ) in the first swivel range (S1), in particular to 0.33 times the maximum velocity (Vₘₐₓ) in the first swivel range (S1).

3. Drawbar-steered industrial truck according to Claim 1 or 2, **characterized in that** in the transition range (S3) the maximum velocity (Vₘₐₓ) can be changed linearly with the swivel range (α) of the drawbar (8).

4. Drawbar-steered industrial truck according to one of Claims 1 to 3, **characterized in that** the first swivel range (S1) comprises a swivel angle (α) of the drawbar (8) in the range of +/- 50° to +/- 70° in particular +/- 60°, starting from the straight-ahead travel position of the drawbar (8).

5. Drawbar-steered industrial truck according to one of Claims 1 to 4, **characterized in that** the second swivel range (S2) comprises a swivel angle (α) of the drawbar (8) in the range of 0° to 15° before the maximum swivel position of the drawbar (8), in particular 10° before the maximum swivel position of the drawbar (8).

6. Drawbar-steered industrial truck according to one of Claims 1 to 5, **characterized in that** the swivel angle (α) of the drawbar (8) can be sensed by means of a continuous sensor device, in particular a potentiometer.

7. Drawbar-steered industrial truck according to Claim 6, **characterized in that** an electronic control device is provided which is operatively connected on the input side to the sensor device and on the output side to the drive motor.

## Revendications

1. Chariot de manutention (1) dirigé par timon, comprenant un timon (8) pivotant autour d'un axe vertical (7) et un moteur d'entraînement de déplacement, la vitesse de déplacement maximale (Vₘₐₓ) du chariot de manutention (1) pouvant être commandée en fonction de l'angle de pivotement (α) du timon (8) autour de l'axe vertical (7), dans une première plage de pivotement (S1) autour de la position de déplacement en ligne droite du timon (8), la première plage de pivotement (S1) incluant la position de déplacement en ligne droite du timon (8) avec un angle de pivotement (α) de 0°, le chariot de manutention (1) pouvant être utilisé avec une vitesse de déplacement maximale (Vₘₐₓ), et dans une deuxième plage de pivotement (S2), laquelle contient la position de pivotement maximale du timon (8) avec un angle de pivotement (α) de +/-90°, pouvant être utilisé avec une vitesse la plus élevée (V1) réduite, **caractérisé en ce qu'**une plage de transition (S3) est formée entre la première plage de pivotement (S1) et la deuxième plage de pivotement (S2), dans laquelle la vitesse de déplacement maximale (Vₘₐₓ) peut être modifiée en continu avec l'angle de pivotement (α) du timon (8).

2. Chariot de manutention dirigé par timon selon la revendication 1, **caractérisé en ce que** la vitesse la plus élevée (V1) dans la deuxième plage de pivotement (S2) correspond à la plage de 0,2 à 0,4 fois la vitesse de déplacement maximale (Vₘₐₓ) dans la première plage de pivotement (S1), notamment à 0,33 fois la vitesse de déplacement maximale (Vₘₐₓ) dans la première plage de pivotement (S1).

3. Chariot de manutention dirigé par timon selon la revendication 1 ou 2, **caractérisé en ce que** dans la plage de transition (S3), la vitesse de déplacement maximale (Vₘₐₓ) peut être modifiée linéairement avec l'angle de pivotement (α) du timon (8).

4. Chariot de manutention dirigé par timon selon l'une des revendications 1 à 3, **caractérisé en ce que** la première plage de pivotement (S1) comprend un angle de pivotement (α) du timon (8) dans la plage de +/-50° à +/-70°, notamment de +/-60° à partir de la position de déplacement en ligne droite du timon (8).

5. Chariot de manutention dirigé par timon selon l'une des revendications 1 à 4, **caractérisé en ce que** la deuxième plage de pivotement (S2) comprend un angle de pivotement (α) du timon (8) dans la plage de 0° à 15° avant la position de pivotement maximale du timon (8), notamment de 10° avant la position de pivotement maximale du timon (8).

6. Chariot de manutention dirigé par timon selon l'une des revendications 1 à 5, **caractérisé en ce que** l'angle de pivotement (α) du timon (8) peut être détecté au moyen d'un dispositif de détection continue, notamment d'un potentiomètre.

7. Chariot de manutention dirigé par timon selon la revendication 6, **caractérisé en ce qu'**un dispositif de commande électronique est présent, dont le côté entrée se trouve en liaison fonctionnelle avec le dispositif de détection et le côté sortie avec le moteur d'entraînement de déplacement.
